# NEUE EUROPÄISCHE PATENTSCHRIFT

(11) **EP 2 532 408 B2**
(45) Veröffentlichungstag und Bekanntmachung des Hinweises auf die Entscheidung über den Einspruch: **05.08.2020**
(45) Hinweis auf die Patenterteilung: 23.04.2014
(21) Anmeldenummer: 12180399.3
(22) Anmeldetag: 26.02.2009
(51) Int. Cl.: B01D 46/00, B01D 46/24, B01D 46/52

(54) **LUFTFILTER MIT VORABSCHEIDER**
AIR FILTER COMPRISING A PREFRACTIONATOR
FILTRE À AIR DOTÉ D'UN PRÉ-DÉPOUSSIÉREUR

(30) Priorität: 26.02.2008 DE 102008011186; 23.12.2008 DE 102008062955
(43) Veröffentlichungstag der Anmeldung: 12.12.2012
(62) Teilanmeldung aus: 09716184.8
(73) Patentinhaber: MANN + HUMMEL GMBH, 71638 Ludwigsburg (DE)
(72) Erfinder: Münkel, Karlheinz, 75038 Oberderdingen (DE); Kolczyk, Markus, 74395 Mundelsheim (DE); Becker, Stefan, 68305 Mannheim (DE); Heim, Michael, 71691 Freiberg a. N. (DE)
(74) Vertreter: Maiwald Patent- und Rechtsanwaltsgesellschaft mbH

(56) Entgegenhaltungen:
- DE-U1- 29 819 335
- FR-A- 1 320 200
- US-A- 3 360 909
- US-A1- 2003 182 910

## Beschreibung

### Gebiet der Erfindung

Die vorliegende Erfindung betrifft einen Luftfilter mit Vorabscheider, und insbesondere einen Luftfilter mit Vorabscheider mit einer aufeinander abgestimmten Strömungsgeometrie zwischen einer Abströmgeometrie eines Vorabscheiders und einer Anströmfläche eines Filterelementes eines Hauptfilters.

Insbesondere im Bereich von Brennkraftmaschinen, die auf bzw. in Fahrzeugen zum Einsatz kommen, ist die Ausgestaltung eines effizienz- und platzoptimierten Luftfiltersystems unerlässlich, um die Abmessungen gering zu halten, und auf der anderen Seite eine dennoch hohe Effizienz der Luftfilteranordnung zu ermöglichen.

Aus beispielsweise EP 1 364 695 A1 ist ein Luftfilter bekannt, der in den Ansaugtrakt einer Brennkraftmaschine integriert ist, um die den Zylindern der Brennkraftmaschine zuzuführende Verbrennungsluft einer Filtration zu unterziehen. Der Luftfilter ist im Wesentlichen dreiteilig aufgebaut und umfasst in einem Filtergehäuse ein Filterelement, welches als auswechselbare Filterpatrone ausgebildet ist, die axial von der Verbrennungsluft durchströmt wird und radial über einen verschließbaren Deckel in das Filtergehäuse einsetzbar ist. Der Filterpatrone ist ein Zyklon-Vorabscheider vorgeschaltet, der zur Abscheidung von groben Schmutzpartikeln dient. Stromab der Filterpatrone befindet sich ein Sekundär- bzw. Feinfilterelement, das ebenfalls radial bei geöffnetem Deckel in das Filtergehäuse einsetzbar ist. Der Zyklon-Vorabscheider, die Filterpatrone und das Feinfilterelement liegen axial hintereinander und werden ohne Umlenkung der zu reinigenden Verbrennungsluft in Achsrichtung durchströmt.

### Zusammenfassung der Erfindung

Der vorliegenden Erfindung liegt die Aufgabe zugrunde, ein Luftfilter mit einem Vorabscheider bereitzustellen, der eine optimierte Anströmgeometrie bereitstellt, um auf diese Weise die Effizienz des Luftfiltersystems zu optimieren.

Die Aufgabe der vorliegenden Erfindung wird gelöst durch den Gegenstand des unabhängigen Anspruchs 1, wobei weitergebildete Ausführungsformen in den unabhängigen Ansprüchen verkörpert sind.

Gemäß einer beispielhaften Ausführungsform der Erfindung wird ein Luftfilter für eine Brennkraftmaschine bereitgestellt mit einem Luftfiltergehäuse und einem Vorabscheider, wobei das Luftfiltergehäuse eine Aufnahme für ein Filterelement und einen Rohgasraumbereich aufweist, wobei der Rohgasraumbereich zu dem Luftfilter begrenzt wird durch das Luftfiltergehäuse und zu einem einzusetzenden Filterelement begrenzt wird durch eine rohgasseitige Mantelfläche bzw. Anströmfläche, wobei der Vorabscheider eine Luftauslasskonfiguration aufweist, wobei die Luftauslasskonfiguration mit einer Anströmfläche eines einzusetzenden Filterelementes korrespondiert, wobei der Vorabscheider eine Zyklonanordnung mit einer Mehrzahl von Einzelzyklonen mit jeweils einem Abströmweg aufweist, wobei die Abströmwege auf eine Anströmfläche eines einzusetzenden Filterelementes ausgerichtet verteilt sind, wobei die Einzelzyklone mit ihren Abströmwegen tangential entlang eines Außenumfangs eines einzusetzenden Filterelementes ausgerichtet sind. Auf diese Weise wird das einströmende Fluid bzw. die einströmende Luft in eine tangentiale Drehung um das Filterelement versetzt, sodass nicht nur der in unmittelbarer Nähe des Zyklonauslasses befindliche Mantelbereich des Filterelementes angeströmt wird, sondern auch in Umfangsrichtung weiter entfernt liegende Bereiche des Filterelementes.

Auf diese Weise wird ungeachtet dessen, ob ein weiterer Vorabscheider bzw. weitere Einzelzyklone vorgesehen sind, die über eine axiale Richtung ein Filterelement anströmen, eine optimierte Anströmungsgeometrie für eine Anströmung über eine Mantelfläche bereitgestellt. Insbesondere wenn ein Filterelement vorgesehen ist, dass ausschließlich über eine äußere Mantelfläche angeströmt wird, kann ein Vorabscheider bzw. können Einzelzyklone entbehrlich sein, die über eine Stirnfläche das Filterelement anströmen. Vielmehr kann der Strömungswiderstand der gesamten Luftfilteranordnung für derartige Filterelemente optimiert werden, indem die Einzelzyklone mit ihren Abströmwegen tangential entlang eines Außenumfangs des einzusetzenden Filterelementes ausgerichtet sind. Eine tangentiale Ausrichtung ermöglicht dabei, dass die einströmende Luft bzw. das einströmende Fluid über eine größere Umfangsfläche bzw. einen größeren Umfangsweg verteilt wird, über den sich auch die Anströmfläche bzw. die Mantelfläche eines Filterelementes erstreckt.

Dabei ist wenigstens ein Teil der Einzelzyklone mit ihren Abströmwegen tangential entlang eines Außenumfangs eines einzusetzenden Filterelementes ausgerichtet.

Eine derartige Anordnung ermöglicht eine strömungsoptimierte Anströmung eines in ein Luftfiltergehäuse eingesetzten Filterelementes, wenn dieses eine Anströmfläche aufweist, die zumindest teilweise über die äußere Mantelfläche des Filterelementes definiert ist. Dieses ist beispielsweise der Fall bei Faltenbalgfiltern, die eine Dichtungskonfiguration aufweisen, die die Trennung von Reingasseite und Rohgasseite bezüglich eines Luftfiltergehäuses auf der Abströmseite vorsieht. Dabei ist nicht ausgeschlossen, dass zusätzlich eine Anordnung von Einzelzyklonen oder auch eines anderen Vorabscheiders vorgesehen wird, der über eine Stirnseite eines Filterelementes das Filterelement anströmt.

Gemäß einer beispielhaften Ausführungsform der Erfindung sind die Einzelzyklone in einer Reihe in Richtung einer axialen Ausdehnungsrichtung eines einzusetzenden Filterelementes angeordnet.

Bei einer Anordnung der Einzelzyklone in einer Linie können die Anströmwege optimiert ausgestaltet werden, sodass eine aufwendige Heranführung einer zu filternden Luft bzw. eines zu filternden Fluides entbehrlich ist. Die Einzelzyklone können dabei nicht nur in einer Linie ausgerichtet sein, um beispielsweise die Baubreite eines Luftfiltergehäuses bzw. einer Luftfilteranordnung schmal auszugestalten, sondern auch entlang eines Umfangs eines einzusetzenden Filterelementes ausgerichtet sein, wenn dies funktional von Vorteil ist.

Gemäß der Erfindung weist das Luftfiltergehäuse einen zu einer radialen Mantelfläche eines einzusetzenden Filterelementes in Umfangsrichtung abnehmenden Abstand auf.

Auf diese Weise kann dem Rechnung getragen werden, dass eine tangential herangeführte zu filterende Luft bzw. ein Fluid sich zirkular um den äußeren Umfang eines Filterelementes herumbewegt und dabei entlang des Umfangs Teile des zu filternden Fluides durch die Filterfläche des Luftfilters treten, sodass die gesamte Menge des noch zu filternden Fluides entlang des Umfanges abnimmt. Auf diese Weise kann zudem bei einer entlang des Umfangs abnehmenden Fluidmenge und bei einer korrespondierend dazu abnehmenden Abstand der Druck des Fluides auf der Anströmseite des Filterelementes im Wesentlichen konstanter gehalten werden, sodass die Filtereffizienz des Filterelementes über den Umfang gleichmäßiger ausgestaltet werden kann, bzw. im Optimalfall konstant ist.

Gemäß der Erfindung weist das Luftfiltergehäuse eine Stufe auf, die einen Bereich eines radial nach außen geringen Abstandes zu einem einzusetzenden Filterelement mit einem Bereich eines radial nach außen großen Abstandes zu einem einzusetzenden Filterelement verbindet.

Auf diese Weise kann in der Stufe die Luftauslasskonfiguration vorgesehen werden. Insbesondere kann durch eine derartige Anordnung die gesamte Bauform und damit das Bauvolumen eines Luftfiltergehäuses kompakter ausgestaltet werden. Die Stufe kann dabei bezüglich der umlaufenden Fläche rechtwinklig ausgestaltet sein, jedoch auch je nach Gegebenheiten geneigt sein. Die Fläche der Stufe erstreckt sich dabei beispielsweise radial von dem einzusetzenden Filterelement weg. Dabei kann die Stufe insbesondere bei ovalen einzusetzenden Filterelementen und Luftfiltergehäusen, die für einen Einsatz eines ovalen Filterelementes vorgesehen sind, im Bereich der weniger gekrümmten Bereiche des Ovals vorgesehen sein.

Gemäß der Erfindung sind in der Stufe eine Mündung bzw. Mündungen einer Luftauslasskonfiguration vorgesehen, wobei die Abströmwege der Einzelzyklone in einer im Wesentlichen tangentialen Richtung ausgerichtet sind.

Auf diese Weise kann die Stufe als Aufnahme verwendet werden, um die Mündungen der Einzelzyklonen anzuordnen, um einen von den Einzelzyklonen abströmenden Fluidstrom über weite Wege um nahezu den gesamten Umfang eines einzusetzenden Filterelementes herum führen zu können, ohne dass der Luftstrom über Gebühr durch beispielsweise Falten eines Faltenfilters in Umfangsrichtung abgebremst wird.

Gemäß der Erfindung ist in der Stufe eine Mündung der Mehrzahl von Einzelzyklonen vorgesehen, mit einem Abströmweg in einer im Wesentlichen tangentialen Richtung.

Auf diese Weise kann insbesondere bei einem Einsatz von mehreren Einzelzyklonen eine verhältnismäßig kompakte Einströmgeometrie in ein Luftfiltergehäuse bereitgestellt werden, die aufgrund mehrerer Einzelzyklone, die beispielsweise entlang einer Linie parallel zu einer axiale Ausdehnungsrichtung eines einzusetzenden Filterelementes eine Ringströmung über eine verhältnismäßig große Breite bereitstellen.

Gemäß einer beispielhaften Ausführungsform der Erfindung sind die Mehrzahl von Einzelzyklonen mit ihren Abströmwegen auf einen Ringspalt zwischen wenigstens zwei Filterbälgen eines einzusetzenden Mehrfachbalgfilters verteilt ausgerichtet.

Auf diese Weise kann der gesamte Strömungswiderstand der Luftfilteranordnung weiter optimiert werden, indem die Abströmwege eines Vorabscheiders korrespondierend angeordnet werden mit den Anströmwegen eines Mehrfachbalgfilters. Da ein Mehrfachbalgfilter konstruktionsbedingt im Regelfall einen ringförmigen Anströmkanal aufweist, ist es von Bedeutung, für die Optimierung des Strömungswiderstandes innerhalb der Luftfilteranordnung die Abströmwege der Einzelzyklone so auszurichten, dass diese korrespondierend mit einer ringförmigen Anströmkanalgeometrie ausgerichtet sind. Die Einzelzyklone können dabei gleichmäßig über die Erstreckungslinie eines Ringspaltes verteilt sein. Dabei können die Einzelzyklone auch auf mehrere Anströmkanäle ausgerichtet sein, die beispielsweise konzentrisch zueinander liegen.

Gemäß einer beispielhaften Ausführungsform der Erfindung weist der Luftfilter ein Filterelement in Form eines Mehrfachbalgfilters auf mit einem außenliegenden Filterbalg und einem radial dazu innenliegenden Filterbalg, wobei die Faltentiefe des außenliegenden Filterbalges kleiner ist als die Faltentiefe eines dazu benachbart radial innenliegenden Filterbalges.

Auf diese Weise kann der Anströmkanal insbesondere bei einer Anströmung in einen Ringspalt zwischen zwei Filterbälgen verhältnismäßig weit radial nach außen angeordnet werden, sodass der Anströmkanal dadurch eine größere effektive Querschnittsfläche aufweisen kann, als ein Anströmkanal, der radial weiter innen liegt. Dies ergibt sich aus dem größeren Umfang des Ringspaltes, wenn dieser radial weiter außen angeordnet werden kann. Ferner kann durch das Bereitstellen einer größeren Faltentiefe bei einem radial innen liegenden Faltenbalg die Flächenbelastung des inneren Faltenbalges und des äußeren Faltenbalges aneinander angenähert werden, sodass eine gleichmäßigere Filterflächenbelastung auftritt.

Gemäß einer beispielhaften Ausführungsform der Erfindung wird an dem außen liegenden Filterbalg an einem der Anströmseite zugewandten Seite eine formwahrende Schale vorgesehen, wobei sich die Schale nur teilweise in einer radialen Richtung über die Faltentiefe des außenliegenden Filterbalges erstreckt.

Auf diese Weise wird durch die formwahrende Schale eine Formstabilität eines Filterelementes bereitgestellt, die insbesondere bei Faltenbalgfiltern von Bedeutung ist, ohne eine Stirnfläche eines Faltenbalges unnötig zu verschließen. Vielmehr können die offenen Flächen zwischen den Filterfalten als zusätzliche Anströmflächen in axialer Richtung verwendet werden, sodass sich eine größere effektive Querschnittsfläche eines Anströmkanales zwischen einem äußeren Faltenbalg und einem inneren Faltenbalg ergibt. Die Rohgasseite und die Reingasseite des entsprechenden Faltenbalges kann durch eine Verklebung verschossen sein, die sich jedoch zur zuverlässigen Trennung nur auf einer Seite des Faltenbalges befinden muss. Ferner können auf der formwahrenden Schale Luft- bzw. Fluidleitende Anordnungen vorgesehen sein, wie beispielsweise Luftleitbleche, um eine optimierte und aerodynamisch günstigere Anströmung des Anströmkanales bereitstellen zu können. Die kann beispielsweise eine trichterförmige Ausgestaltung der stirnseitigen Anströmfläche der formwahrenden Schale sein, die strömungstechnische Staupunkte vermeidet.

Gemäß einer beispielhaften Ausführungsform der Erfindung weist ein Einzelzyklon einen Zyklonenkanal auf, an dessen Einlassende eine Leitblechanordnung vorgesehen ist, die ausgelegt ist, um eine einströmende Luft bzw. ein Fluid in eine Drehbewegung um eine Erstreckungsachse des Zyklonenkanals zu versetzen, und wobei an dessen Auslassende eine konzentrische Auslassanordnung vorgesehen ist mit einem innenliegenden Reinluftauslass und einem außen liegenden Filterpartikelauslass.

Auf diese Weise wird ermöglicht, mit einer verhältnismäßig kompakten Bauform einen Einzelzyklon bereitzustellen, bei dem zu reinigende Luft bzw. zu reinigendes Fluid derart in eine Rotationsbewegung innerhalb des Zyklonenkanals versetzt wird, dass sich herauszufilternde Partikel aufgrund des Fliehkraft an die Außenwand des Zyklonenkanals bewegen und bei einer fortschreitenden Strömung entlang der axialen Ausdehnungsrichtung des Zyklonenkanals zwischen einen Ringschlitz gedrückt werden, der außerhalb des innenliegenden Reinluftauslasses liegt und einen außen liegenden Filterpartikelauslass darstellt. Die von den schweren Filterpartikeln gereinigte Luft bzw. Fluid ge-langt dann durch den innenliegenden Reinluftauslass in den Abströmbereich des Einzelzyklons, der auf eine Anströmfläche eines Filterelementes ausgerichtet ist.

Gemäß einer beispielhaften Ausführungsform der Erfindung befindet sich in Umfangsrichtung zwischen einer Außenwand des Luftfiltergehäuses und einer Anströmfläche eines einzusetzenden Filterelementes eine Fluidleitblechanordnung. Mit einer derartigen Leitblechanordnung kann eine optimierte Strömungsgeometrie innerhalb des Luftfiltergehäuses bereitgestellt werden, sodass insbesondere feinere Nuancen im Strömungsweg eingestellt werden können, ohne dass die gesamte Geometrie eines Luftfiltergehäuses modifiziert werden muss.

Es sei verstanden, dass auch eine Kombination der zuvor beschriebenen Merkmale möglich ist, wodurch sich zum Teil eine synergetische Wechselwirkung einstellen kann, die über die Summe der Einzelwirkungen der genannten Merkmale hinausgeht.

Im Folgenden werden nun beispielhafte Ausführungsformen der Erfindung anhand der beigefügten Zeichnungen beschrieben und erläutert.

### Kurze Beschreibung der Zeichnungen

Figur 1 zeigt eine radiale Schnittansicht eines Luftfilters mit einem tangential anströmenden Zyklon.
Figur 2 zeigt zur Erläuterung eine Aufsicht eines Filterelementes von einer Seite mit zwei An- bzw. Abströmkanälen.
Figur 3 zeigt zur Erläuterung eine Aufsicht eines Filterelementes mit einem An- bzw. Abströmkanal.
Figur 4 zeigt ein Mehrfachfaltenfilterelement gemäß einer beispielhaften Ausführungsform der Erfindung.

Die im Folgenden beschriebenen Ausführungsformen sind keinesfalls beschränkend aufzufassen und zeigen zweckmäßige, jedoch nicht ausschließliche Ausführungsformen der Erfindung.

### Detailierte Beschreibung beispeilhafter Ausführungsformen der Erfindung

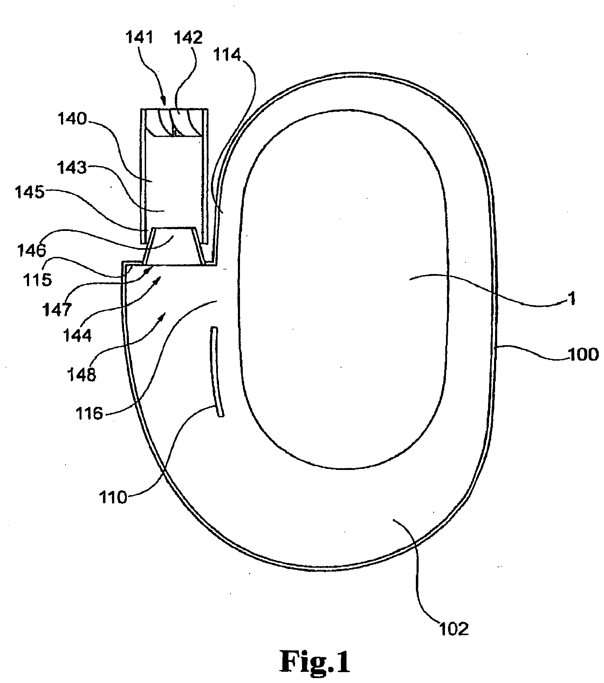

Figur 1 zeigt eine Schnittansicht in einer radialen Ausdehnungsrichtung eines Filterelementes 1 bzw. eines Luftfiltergehäuses 100. In dieser Anordnung ist die radiale Anordnung eines Einzelzyklons 140 zu sehen, der in der hier gezeigten Ausführungsform mit seinem Abströmweg 148 in eine tangentiale Richtung bzgl. Der Mantelfläche des Filterelementes 1 ausgerichtet ist. Der Einzelzyklon 140 weist dabei einen Zyklonkanal 143 mit einer Einlassseite 141 und einer Auslassseite 144 auf. Die Einlassseite 141 weist dabei eine Luftleitblechanordnung 142 auf, die so angeordnet ist, dass eine einströmende Luft- bzw. ein einströmendes Fluid derart in eine Rotation um eine Längsachse des Zyklonkanals 143 verbracht wird, dass darin befindliche Staubpartikel fliehkraftbedingt an die äußere Wand des Zyklonkanals 143 geschleudert werden, und bei einer überlagerten Strömung von der Eingangsseite 141 in Richtung der Ausgangsseite 144 in den Zwischenraum 145 zwischen dem Zyklonkanalgehäuse und dem Auslasstrichter fallen bzw. gedrückt werden. Auf diese Weise kann fliehkraftbedingt das zu reinigende Fluid bzw. die zu reinigende Luft von schweren Staubpartikeln gereinigt werden, während die von den Staubpartikeln gereinigte Luft aus der Reinluftauslassöffnung 148 in den Rohgasraum 102 des Luftfiltergehäuses 100 eintritt. Das Luftfiltergehäuse weist in der in Figur 1 gezeigten Ausführungsform einen Bereich auf, der nur einen geringen Abstand zu dem einzusetzenden Luftfilter 1 aufweist, der in Figur 1 mit 114 gekennzeichnet ist. Darüber hinaus weist das Luftfiltergehäuse 100 auch einen Bereich 116 auf, der einen relativ breiten Abstand des Luftfiltergehäuses zu dem einzusetzenden Luftfilterelement 1 aufweist. Diese beiden Bereiche 114 und 116 sind durch eine Stufe 115 voneinander getrennt, wobei sich diese Stufe in der in Figur 1 gezeigten Ausführungsform in radiale Richtung erstreckt. In dieser Stufe kann beispielsweise die Mündung des Einzelzyklons vorgesehen sein, insbesondere wenn dieser in eine tangentiale Richtung in den Innenraum bzw. den Rohgasraum 102 des Luftfiltergehäuses 1 einbläst. Auf diese Weise wird das einströmende Fluid bzw. die einströmende Luft in eine tangentiale Drehung um das Filterelement 1 versetzt, sodass nicht nur der in unmittelbarer Nähe des Zyklonauslasses befindliche Mantelbereich des Filterelementes 1 angeströmt wird, sondern auch in Umfangsrichtung weiter entfernt liegende Bereiche des Filterelementes 1. Da betriebsbedingt das zu reinigende Fluid bzw. die zu reinigende Luft durch die Filterfläche des Filterelementes 1 tritt, wird die Menge des zu reinigenden Fluides in Umlaufende Richtung weniger, da diese sukzessiv durch die Filterfläche von dem Rohgasraum 102 in den hier nicht gezeigten Reingasraum übertritt. Durch eine sich verjüngende Ausgestaltung des Zwischenraumes zwischen dem Luftfiltergehäuse 100 und dem Filterelement 1 kann jedoch der anstehende Druck des zu reinigenden Fluides bzw. der zu reinigenden Luft im Wesentlichen über die gesamte Umfangslänge des Filterelementes 1 konstant gehalten werden. Um insbesondere Turbulenzen im Bereich der Einströmmündung an der Stufe 15 zu vermeiden, können beispielsweise Luftleitbleche 110 oder andere strömungsleitende und optimierende Vorrichtungen vorgesehen sein. Statt des Einzelzyklons kann auch ein einfacher Stutzen vorgesehen sein, der einen Lufteinlass mit einer tangentialen Anströmung hervorruft. Durch eine tangentiale Anströmung und eine zirkulare Führung der Strömung um das Filterelement 1 kann im Gehäuse 100 eine Vorabscheidung erreicht werden. In diesem Fall kann ein Staubaustrag im Gehäuse integriert werden, um die abgeschiedenen Partikel aus dem Gehäuse abzuführen.

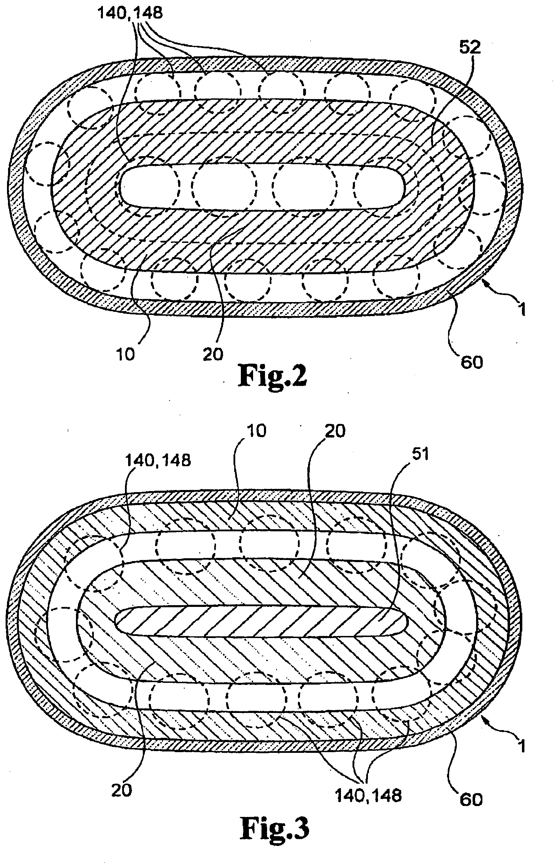

Figur 2 zeigt zur Erläuterung eine schematische Ansicht eines Faltenfilterelementes, mit einer schematischen Anordnung von Einzelzyklonabströmwegen 148. Figur 2 zeigt dabei eine Ausführungsform bei der das Filterelement zwei Anströmkanäle aufweist. Die formwahrende Schale 60 mit einer daran angeordneten Dichtungsgeometrie befindet sich in der von den Einzelzyklonen 140 abgewandten axialen Richtung des Luftfiltergehäuses. In der in Figur 2 gezeigten Ausführungsform sind der äußere Faltenbalg 10 und der innere Faltenbalg 20 durch das zweite Dichtungselement 52 fehlluftdicht miteinander verbunden, sodass von den Einzelzyklonen angeströmte zu reinigende Luft in den äußeren Filterkanal sowie den inneren Filterkanal einströmt. Über den äußeren Filterkanal strömt die zu reinigende Luft über die äußere Mantelfläche des äußeren Faltenfilters in einen hier nicht gezeigten Reingasbereich, während die durch den inneren Anströmkanal einströmende Luft durch eine innere Mantelfläche des inneren Faltenbalges in den Reingasbereich einströmt.

Figur 3 zeigt zur Erläuterung eine Anordnung eines Filterelementes, das im Wesentlichen mit dem in Figur 2 gezeigten Filterelement übereinstimmen kann, wobei jedoch dieses Filterelement dann von der axial gegenüberliegenden Seite betrachtet wird. In diesem Fall wird der Anströmkanal durch die innere Mantelfläche des äußeren Filterelementes 10 und die äußere Mantelfläche des inneren Filterelementes 20 gebildet. Der dadurch entstehende Ringkanal wird durch die Abströmwege 148 der Einzelzyklone 140 angeströmt. Dabei sind die gegenüberliegenden inneren Mantelflächen des inneren Faltenfilters 20 mit einem ersten Dichtungselement 51 fehlluftdicht abgedichtet. Eine formwahrende Schale 60 ist in der in Figur 3 gezeigten Aufsicht relativ schmal ausgeführt, sodass auch die Stirnflächen sowohl des äußeren Faltenbalges 10 als auch des inneren Faltenbalges 20 für eine Anströmfläche zur Verfügung stehen. Dabei versteht es sich, dass die jeweils reingasseitigen Faltenseiten, die beim inneren Filterfaltenbalg 20 innen liegen bzw. die beim äußeren Filterfaltenbalg 10 außen liegen jeweils fehlluftdicht dem ersten Dichtungselement 51 bzw. der dichtenden formwahrenden Schale 60 verbunden sind, sodass wiederum eine zuverlässige Trennung zwischen Reingasseite und Rohgasseite gewährleistet ist.

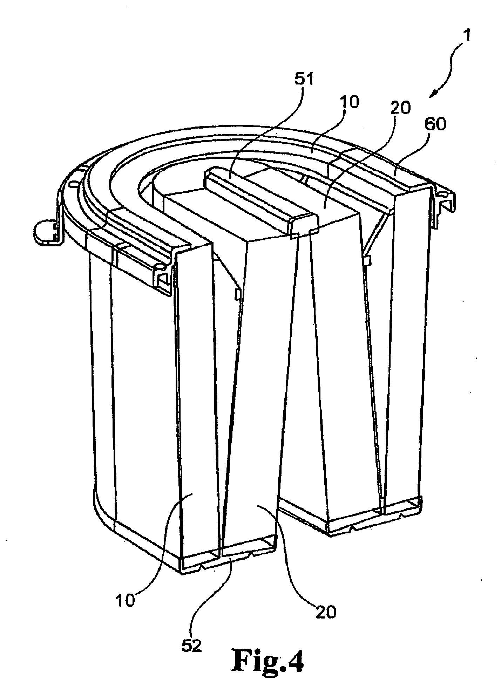

Figur 4 zeigt eine dreidimensionale schematische Ansicht eines Zweibalgfaltenfilterelementes, bei dem die hier von schräg oben sichtbare Seite mit der Aufsicht des in Figur 3 gezeigten Faltenfilters korrespondiert, während die hier verdeckte untere Seite mit der in Figur 2 gezeigten Aufsicht des Filterelementes 1 korrespondiert. In Figur 4 ist der schematische Aufbau des Faltenfilterelementes etwas deutlicher sichtbar aufgrund der räumlichen Darstellung des Filterelementes. Die formwahrende Schale 60 ist hier mit einer Dichtungsanordnung versehen, die in einer hier nicht gezeigten Aufnahme eines Luftfiltergehäuses eingreifen kann. Die formwahrende Schale 60 erstreckt sich dabei in der hier gezeigten Ausführungsform nur teilweise über die Faltentiefe des äußeren Faltenbalges 10, um auf diese Weise die Anströmfläche des äußeren Faltenbalges insbesondere der innen Mantelfläche des äußeren Faltenbalges 10 zu verbessern, sofern von dieser Seite eine Anströmung erfolgt.

Es sei angemerkt, dass der Begriff "umfassen" weitere Elemente nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

## Patentansprüche

1. Luftfilter für eine Brennkraftmaschine mit
einem Luftfiltergehäuse (100) mit einem Rohgasraum (102),
einem Vorabscheider (120) aufweisend eine Zyklonanordnung (130) mit einer Mehrzahl von Einzelzyklonen (140) mit jeweils einem Abströmweg (148) und
einem über eine äußere Mantelfläche angeströmten Filterelement mit einem Außenumfang,
wobei das Luftfiltergehäuse (100) eine Aufnahme (101) für das Filterelement und einen durch das Luftfiltergehäuse (100) und die rohgasseitige Mantelfläche bzw. Anströmfläche des eingesetzten Filterelements begrenzten Rohgasraumbereich aufweist,
wobei das Luftfiltergehäuse (100) einen zu einer radialen Mantelfläche des Filterelementes in Umfangsrichtung abnehmenden Abstand aufweist,
wobei die Abströmwege auf die Anströmfläche des Filterelementes ausgerichtet verteilt sind,
wobei der Vorabscheider (120) eine Luftauslasskonfiguration (121) aufweist,
die mit der über die äußere Mantelfläche des Filterelementes definierten Anströmfläche des eingesetzten Filterelementes derart korrespondiert,
dass die Einzelzyklone (140) mit ihren Abströmwegen tangential entlang des Außenumfangs des eingesetzten Filterelementes in den Rohgasraum ausgerichtet sind, derart, dass die einströmende Luft in eine Drehung um das Filterelement versetzt wird,
wobei das Luftfiltergehäuse (100) eine Stufe (115) aufweist, die einen Bereich eines geringen Abstandes (114) zu einem einzusetzenden Filterelement radial nach außen mit einem Bereich eines großen Abstandes (116) zu einem einzusetzenden Filterelement verbindet,
wobei in der Stufe (115) eine Mündung (147) einer Luftauslasskonfiguration (121) vorgesehen ist mit einem Abströmweg (148) in einer im Wesentlichen tangentialen Richtung,
wobei in der Stufe (115) eine Mündung (147) der Mehrzahl von Einzelzyklonen (140) vorgesehen ist mit einem Abströmweg (148) in einer im Wesentlichen tangentialen Richtung.

2. Luftfilter nach Anspruch 1, wobei die Einzelzyklone (140) in einer Reihe in Richtung einer axialen Ausdehnungsrichtung (A) des Filterelementes angeordnet sind.

3. Luftfilter nach einem der Ansprüche 1 bis 2, wobei ein Einzelzyklon (140) einen Zyklonkanal (143) aufweist, an dessen Einlassende (141) eine Leitblechanordnung (142) vorgesehen ist, die ausgelegt ist, um einströmende Luft in eine Drehbewegung um eine Erstreckungsachse des Zyklonenkanals (143) zu versetzen,
und an dessen Auslassende (144) eine konzentrische Auslassanordnung vorgesehen ist mit einem innenliegenden Reinluftauslass (146) und einem außenliegenden Filterpartikelauslass (145).

4. Luftfilter nach einem der Ansprüche 1 bis 3, wobei in Umfangsrichtung zwischen einer Außenwand (105) des Luftfiltergehäuses (100) und einer Anströmfläche des Filterelementes eine Leitblechanordnung (110) vorgesehen ist.

## Claims

1. Air filter for an internal combustion engine having
an air filter housing (100) with a raw gas chamber (102),
a pre-separator (120) featuring a cyclone arrangement (130) with a plurality of individual cyclones (140) with a discharge path (148) each and
a filter element with an outer periphery flowed through via an outer girth area, wherein the air filter housing (100) features a receptacle (101) for the filter element and a raw gas chamber defined by the air filter housing (100) and the raw gas sided girth area and/or the inflow surface of the inserted filter element,
wherein the air filter housing (100) features a distance decreasing in circumferential direction with regard to a radial girth area of the filter element,
wherein the discharge paths are distributed in direction to the inflow surface of the filter element,
wherein the pre-separator (120) features an air outlet configuration (121) which corresponds with the inflow surface of the inserted filter element that is defined via the outer girth area of the filter element in such a way
that the individual cyclones (140) with their discharge paths are directed tangentially along the outer periphery of the inserted filter element towards the raw gas chamber in such a way that it causes the inflowing air to rotate around the filter element,
wherein the air filter housing (100) features a step (115), which connects an area of a small distance (114) in relation to a filter element to be inserted radially outwardly with an area of a large distance (116) in relation to a filter element to be inserted,
wherein in the step (115) is provided an orifice (147) of an air outlet configuration (121) with a discharge path (148) in a substantially tangential direction,
wherein in the step (115) is provided an orifice (147) of the plurality of individual cyclones (140) with a discharge path (148) in a substantially tangential direction.

2. Air filter according to claim 1, wherein the individual cyclones (140) are disposed in a row in the direction of an axial extension direction (A) of the filter element.

3. Air filter according to one of the claims 1 to 2, wherein an individual cyclone (140) features a cyclone conduit (143) at the inlet end (141) of which is provided a baffle arrangement (142) which is designed to cause inflowing air to rotate around an extension axis of the cyclone conduit (143) and at the outlet end (144) of which a concentric outflow arrangement is provided having an internal clean air outlet (146) and an external filter particle outlet (145).

4. Air filter according to one of the claims 1 to 3, wherein a baffle arrangement (110) is provided in circumferential direction between an outer wall (105) of the air filter housing (100) and an inflow surface of the filter element.

## Revendications

1. Filtre à air pour un moteur à combustion interne comportant un boîtier de filtre à air (100) avec un compartiment à gaz brut (102),
un pré-séparateur (120) présentant un ensemble de cyclones (130) comportant une pluralité de cyclones individuels (140) avec respectivement une trajectoire d'échappement (148) et un élément filtrant parcouru par le flux par l'intermédiaire d'une surface d'enveloppe extérieure et doté d'une circonférence extérieure,
le boîtier de filtre à air (100) présentant un logement (101) pour l'élément filtrant et un compartiment à gaz brut limité par le boîtier de filtre à air (100) et par la surface d'enveloppe du côté de gaz brut et/ou la surface d'afflux de l'élément filtrant monté,
le boîtier de filtre à air (100) présentant une distance décroissante en sens circonférentiel par rapport à une surface d'enveloppe radiale de l'élément filtrant,
les trajectoires d'échappement étant distribuées dirigées sur la surface d'afflux de l'élément filtrant,
le pré-séparateur (120) présentant une configuration de sortie d'air (121) qui correspond avec la surface d'afflux de l'élément filtrant monté, laquelle est définie par la surface d'enveloppe extérieure de l'élément filtrant, de sorte que
les cyclones individuels (140) avec leurs trajectoires d'échappement soient dirigés en sens tangentiel, le long de la circonférence extérieure de l'élément filtrant monté, vers le compartiment à gaz brut de sorte que l'air affluant soit mis en rotation autour de l'élément filtrant,
le boîtier de filtre à air (100) présentant un palier (115) qui relie en sens radial vers l'extérieur une zone d'une petite distance (114) par rapport à un élément filtrant à monter à une zone d'une grande distance (116) par rapport à un élément filtrant à monter,
une bouche (147) d'une configuration de sortie d'air (121) étant prévue dans le palier (115), avec une trajectoire d'échappement (148) dans une direction essentiellement tangentielle,
une bouche (147) de la pluralité de cyclones individuel (140) étant prévue dans le palier (115), avec une trajectoire d'échappement (148) dans une direction essentiellement tangentielle.

2. Filtre à air selon la revendication 1, les cyclones individuels (140) étant disposés en une rangée dans une direction d'extension axiale (A) de l'élément filtrant.

3. Filtre à air selon l'une des revendications 1 à 2, un cyclone individuel (140) présentant un canal de cyclone (143) à l'extrémité d'admission (141) duquel est prévu un ensemble de tôles de guidage (142) conçu pour mettre en rotation l'air affluant autour d'un axe d'extension du canal de cyclone (143) et à l'extrémité de sortie (144) duquel est prévu un ensemble de sortie concentrique avec une sortie d'air pur interne (146) et une sortie de particules filtrantes externe (145).

4. Filtre à air selon l'une des revendications 1 à 3, un ensemble de tôles de guidage (110) étant prévu en sens circonférentiel entre une paroi extérieure (105) du boîtier de filtre à air (100) et une surface d'afflux de l'élément filtrant.
